# EUROPEAN PATENT SPECIFICATION

(11) **EP 1 402 350 B1**
(45) Date of publication and mention of the grant of the patent: **13.07.2011**
(21) Application number: 00985185.8
(22) Date of filing: 15.12.2000
(51) Int. Cl.: G06F 9/44

(54) **METHOD AND SYSTEM FOR ACCES IN OPEN SERVICE ARCHITECTURE**
VERFAHREN UND SYSTEM FÜR DEN ZUGRIFF IN EINER OFFENEN DIENSTARCHITEKTUR
PROCEDE ET SYSTEME PERMETTANT D'ACCEDER A UNE ARCHITECTURE DE SYSTEMES OUVERTS

(43) Date of publication of application: 31.03.2004
(73) Proprietor: Nokia Siemens Networks Oy, 02610 Espoo (FI)
(72) Inventor: YLIPIETI, Mika, 02150 Espoo (FI)
(74) Representative: Borgström, Markus
(86) International application number: PCT/EP2000/012885
(87) International publication number: WO 2002/048858

(56) References cited:
- EP-A- 1 120 979
- WO-A-00/22792
- WO-A-02/11459
- WO-A-99/07106
- IEEE COMMUNICATIONS MAGAZINE, June 2000 (2000-06), pages 86-93, XP000932650 Ireland

## Description

### FIELD AND BACKGROUND OF THE INVENTION

The invention generally relates to open service architecture such as Parlay or OSA (Open Service Architecture). OSA of 3GPP (Third Generation Partnership Program) is similar to Parlay. In a Parlay architecture, Parlay Application Programming Interfaces (APIs) are used to provide service control in any type of network.

Parlay APIs are specified by the Parlay Group Inc. The Parlay Group is an open, multi-vendor forum and has been formed with the intention to increase the number of communications applications by specifying and promoting open Application Programming Interfaces that intimately link IT applications with the capabilities of the communications world. The Parlay Group creates open, technology independent Application Programming Interfaces (APIs) which enable IT companies, ASPs (Application Service Providers), ISV's, Internet Companies, E-Business Companies, software creators, service bureaus, and large and small enterprises as well as network providers, network equipment vendors and application suppliers to develop applications across multiple networks. Furthermore, the Group promotes the use of Parlay APIs and ultimate standardization.

Parlay is an umbrella architecture which provides network independence and application portability. The Parlay APIs will enable off-the-shelf network applications/components (e.g. messaging, mobility, end-to-end quality of service, etc.) to be developed by application providers (ISVs/ASPs) independent of the underlying voice/multimedia network.

Parlay APIs can be used to discover and access network services with easy method calls that are passed over a middleware layer providing method call transportation. Example middlewares are Common Object Request Broker Architecture (CORBA) and Java Remote Method Invocation (Java RMI) technologies. These technologies use some transport layer technology for the actual transportation between network elements. The IP (Internet Protocol) protocol may be used for this purpose.

A Parlay client application (CA) entity (an entity in Parlay API specification) issues Parlay API method calls to other Parlay entities, e.g. Parlay framework and Parlay service entities. All possible method calls between these entities and their semantics are described e.g. in Parlay 2.1 specifications. A CA entity can be owned by a third party which can produce value added services by using functionality provided by a network operator, e.g. create calls or query location information from the network by using Parlay API method calls.

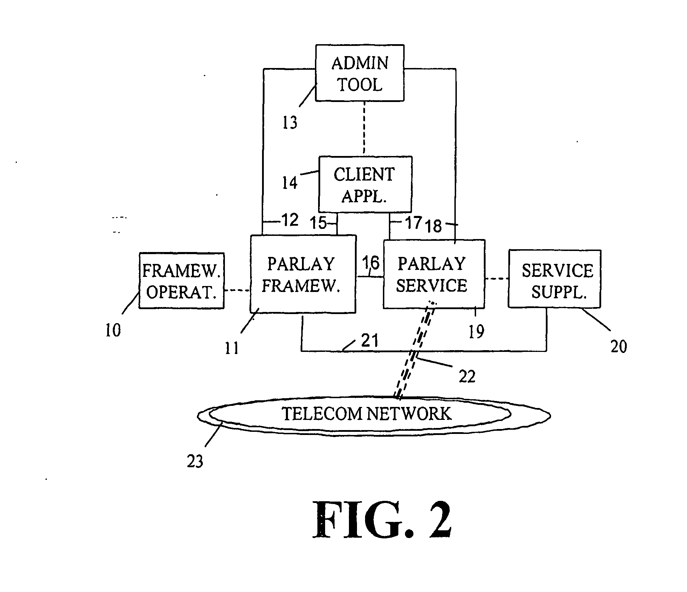

Fig. 2 illustrates the basic architecture of Parlay APIs. The Parlay APIs are object-oriented and may be located in several interfaces 12, 15, 16, 17, 18, and 21 as shown in Fig. 2. Further, network dependent interface(s) 22 are provided. Phase 1 of Parlay specification addressed public interfaces 15, 17 between enterprise-based client applications 14 and Parlay services 19 (interface 17) and the Parlay Framework 11 (interface 15). Parlay Service Interfaces 17 offer applications access to a range of network capabilities of one or more networks 23.

Parlay Framework Interfaces provide 'surround' capabilities necessary for the Service Interfaces to be open, secure, resilient and manageable.

In Phase 2 of Parlay specification, additional public interfaces 12, 16, 18, and 21 are introduced to support administrative functions within the enterprise (interfaces 12 and 18) and to permit the supply of Parlay services by third party vendors (interfaces 16 & 21). In summary, the *client application view* of the framework 11 is represented by interfaces 15 and 17, while the *Parlay service view* of the framework 11 is represented by interfaces 16 and 21. Element 10 represents a framework operator administrator. Element 13 symbolizes an enterprise operator administration tool. Element 20 is a service supplier administration tool.

WO 02/11459 (filed before the present application but having a publication date after the filing date of the present application) describes a gateway having a platform on which resides a CORBA bus, an inner layer of Parlay APIs and an outer layer of network service interfaces for controlling network resources. The gateway also comprises application interfaces and Parlay APIs residing on remote platforms which also host applications wishing to access the network resources.

### SUMMERY OF THE INVENTION

The present invention aims at improving Parlay access control.

The present invention provides a method and/or system as defined in the independent claims. Some preferred implementations of the invention are defined in the dependent claims.

Generally, the present invention relates to open service architecture or Parlay API. The invention relates to the manner of controlling access to Parlay service entities and thus provides a solution for a Parlay access control.

The invention generally proposes combining of gateway and Parlay framework entities for improved access control.

In Parlay API there is a framework and one or more service entities (i.e. a set of service entities). A client application establishes contact to the network to be controlled via the framework. It authenticates itself for the framework, discovers services and signs a service agreement. After these procedures the client can start using the actual Parlay service entities.

The invention provides an access expiry mechanism for Parlay APIs.

The gateway entity, e.g. Internet protocol (IP) firewall can be used to restrict access in an IP network environment.

Some preferred features of the invention (isolated and/or in arbitrary combination, without restricting the invention to any of these features) are:
- the invention relates to service agreement;
- the signer is an external service providers application trying to access operators service capabilities;
- the context of the invention is Parlay API and access to service entities;
- there is a framework;
- the signer contacts the framework, and not the services, for access request;
- the services forward no data to the framework;
- the invention primarily, and preferably exclusively, relates to access servers and end-user access. (End-users may access Client Applications (CA) in Parlay independent way and CA uses Parlay to access telecom network services).

The Parlay service access can now be controlled, preferably with the help of the gateway entity, e.g. IP firewall. For example, if a Client Application (CA) has obtained an object reference of a generic call control service for a certain time, e.g. 24 hours, the gateway, e.g. IP firewall can guarantee that the CA cannot access it after this period; i.e. a CA must obey the agreement it has made when obtaining the reference to this service from the Parlay framework. In addition, a CA cannot send method calls to an arbitrary Parlay service entity and hence cause unwanted overload to that service.

Client Applications thus cannot use a service longer that they have promised to and they can access services only after they have signed the service agreement.

### BRIEF DESCRIPTION OF THE DRAWINGS

Fig. 1 shows an embodiment in accordance with the present invention; and
Fig. 2 illustrates the basic structure of a Parlay architecture.

### DETAILED DESCRIPTION OF PREFERRED EMBODIMENTS OF THE INVENTION

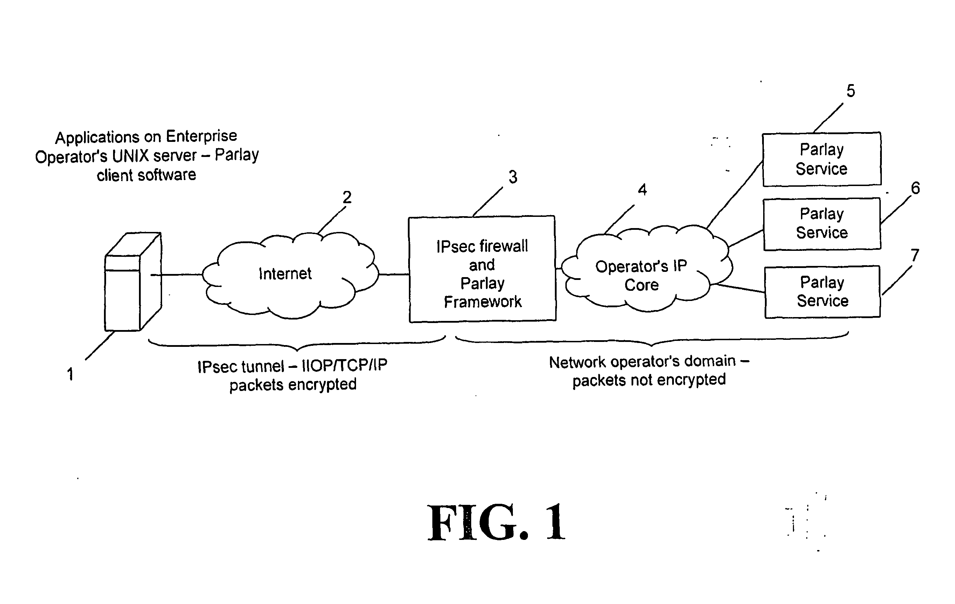

In the embodiment shown in Fig. 1, one or more CAs (Client Applications) is running on a third party server 1 connectable via Internet (IP-based network) 2 to a network equipment 3. The CA and/or the server 1 running the CA represents a client entity which preferably is an addressable node. The client entity need not necessarily be a separate network element or equipment but can also be implemented as part of or in another network equipment. Within a given IP node there can e.g. be a multitude of client entities having different security parameters (e.g. algorithms or different keys). For instance, in an IP node, there can be provided two or more client processes having different IPSEC security parameters.

The CA can access Parlay Service entities 5, 6, 7 through the network equipment (entity) 3 which is a combined gateway, preferably a firewall, in particular a IP firewall, and Parlay framework entity. The number of Parlay Service entities or offered Parlay services is arbitrary and may also be higher or lower than the three shown entities 5 to 7.

According to this preferred implementation, the network equipment 3 combines gateway (e.g. IP firewall) and Parlay framework functionalities.

According to another embodiment of the invention, the gateway entity (e.g. IP firewall) and Parlay framework functionalities may be implemented in separate network equipments provided that the Parlay Framework can control the gateway by using an appropriate protocol.

The Parlay services 5, 6, and/or 7 are accessible from network equipment 3 via an operator's core network 4 which may be packet-based, preferably IP-based (IP, Internet Protocol).

The Parlay elements 3, 5, 6, 7 provide Parlay APIs which may be Service Interfaces or Framework Interfaces (see e.g. Fig. 2). The Service Interfaces of service elements 5 to 7 offer applications access to a range of network capabilities and information, whereas the Framework Interfaces provide the supporting capabilities necessary for the Service Interfaces to be secure, and manageable. The functions provided by the service interfaces allow access to traditional network capabilities such as call management, messaging, and user interaction.

The service interfaces may also include generic application interfaces to ease the deployment of communications applications. Parlay network services 5 to 7 may also provide Generic charging, Enhancement of user profile and subscription data handling, Policy management.

Functions provided via the framework interfaces of equipment 3 may include Service Registration and subscription and discovery, Authentication and Authorisation, Integrity Management, Management support. Generic Parlay application interfaces may be used for Mobile E-pay.

The implementation of Parlay is based on application servers outside the network domain, running Parlay applications. A Parlay Gateway, provided by the network operator, may ensure secure, manageable access to capabilities in the service provider's network.

One of the preferred aspects of this embodiment of the invention is to control the gateway or firewall in equipment 3 from the Parlay framework likewise included in equipment 3, preferably in such a manner that when authentication and service agreement signing has been performed by the client, the gateway or firewall will grant access to services 5, 6, and/or 7 via the firewall for the client. The framework can also control an IPsec security gateway (IPsec = IP Security Protocol) so that a security association is used to convey the operations from the client to the service as long as the agreement is valid. After that the security policy may be changed so that all traffic from the client address to the service is ignored.

Parlay service access can be controlled by using the gateway which preferably is an IP gateway, preferably an IP-based firewall. Parlay framework entity controls the gateway and their physical location is, in this embodiment, in the same equipment 3. When a client application (which is possibly owned by a third party) e.g. of server 1 authenticates itself with the Parlay framework entity 3 and subsequently makes the discovery procedure to locate the needed service 3, 4, 5 and furthermore signs the service agreement (e.g. as specified in Parlay 2.1 API specifications), the IP firewall rules are modified to allow access from this third party CA's IP address to the IP address of the Parlay Service entity 3, 4, 5. This is how the access is granted.

It should also be appreciated that the gateway, e.g. IP firewall and the Parlay framework entity could be located in separate physical nodes, which could have e.g. separate IP addresses. In this embodiment of the invention, the Parlay framework node has a message interface to the IP firewall. The Parlay framework node could after successful authentication and service agreement signing with the CA, issue management commands to the IP firewall to modify the said firewall rules. The management commands could be issued e.g. by opening a command line interface session to the firewall. Similarly, network management protocol interface between the Parlay framework node and the IP firewall could be applied for the task.

To restrict the access between CA and the Service entity, the IP firewall rules can be modified to reject packets from the IP address of the CA to the IP address of the Parlay Service entity.

Furthermore, if protection against sender's IP address spoofing and/or data confidentiality is needed, the IP firewall may be implemented to support IPsec protocol (specified by the Internet Engineering Task Force (IETF)).

This means, for instance, that the firewall is implementing a security gateway similar to the one in IPSEC architecture. The firewall could also have at least one associated IPSEC security association database (SAD) and security policy database (SPD).

In IPSEC, the security policy database contains the criteria for the protection offered to different datagrams. For instance, each datagram has three processing options: it may be protected by IPSEC, it may pass without further protection or it may be discarded. The security association database contains the parameters for the currently active security associations. The entries in the security association database contain the destination IP address, IPSEC protocol and security parameter index, the sequence number counter, the sequence number counter overflow flag, anti-replay counter for inbound datagrams, authentication headers (AH) authentication algorithm and its parameters, encapsulating security payload (ESP) encryption and authentication algorithm and their parameters, the hard and soft lifetimes, the protocol mode and path MTU value along with path MTU aging information.

In IPSEC, the security association is a secure unidirectional logical connection between two network entities. All IP datagrams using the same security association are offered equal protection. A security association is uniquely defined by the triplet comprising security parameter index that is a 32 bit long identifier, a destination IP address and a security protocol which is either AH or ESP. The security associations for a datagram comprise the security protocols in transport mode on the IP datagrams. For instance, for given datagrams both authentication protocols and encryption could be applied.

For instance, when the authentication of the CA has been performed and the service agreement has been signed, the Parlay framework could issue one or more instructions towards the IPSEC nodes to modify the behaviour so that inbound messages (datagrams) coming from the CA can pass the security gateway and can thus be received by the service entities. When the service agreement expires, the inbound datagrams can no longer be passed.

This means, for instance, that after the service agreement signing by the command of the Parlay framework node, the SPD modifies its security policies concerning the IP address of the CA. When the service agreement has been signed, the policy is modified so that inbound packets from the CA are allowed to pass to the service entities. Alternatively, instead of the IP address of the CA, the IP address of a security gateway between the CA and the security gateway of the core network could be used.

In accordance with IPSEC, an inbound IP datagram is matched against the security association database using the triplet comprising security parameter index, destination IP address and security protocol. IPSEC processing is applied to the IP datagram using the security associtions parameters until all the security associations are processed.

When the IPSEC processing is complete both the IP datagram and the security association processing order are looked up in the security policy database to ensure that a security policy exist for the IP datagram and the processed IPSEC protocols. If the security policy entry exists, the higher level packet or the IP datagram received from a tunnel mode security association is processed further.

Thus, whenever a service agreement is effective between the CA and the Parlay framework node, for instance, the security policy database is in the state that IPSEC protection is applied for the datagrams from the CA (or its corresponding security gateway). By having the IPSEC effective means, for instance, that the inbound datagrams are processed in accordance with the triplet comprising security parameter index, destination IP address and security protocol carried in the datagram, which specify the security associations applicable for the datagram.

Whenever a service agreement is not effective between the CA and the Parlay framework node, for instance, the security policy database is in the state that datagrams from the CA (or its corresponding security gateway) are discarded.

The exchange of the keys for the security associations for the CA can be applied either beforehand or using key exchange protocols.

In the embodiment shown in Fig. 1, the server 1 may be a server, e.g. a UNIX-based server, of an enterprise operator and includes one or more application programs (client applications) representing Parlay client software. The server 1 communicates with network equipment 3 via Internet 2 preferably using an IPsec tunnel transmitting the packets in encrypted form. The packets may be transmitted based on any suitable protocol such as IIOP, TCP, IP.

The communication between network equipment 3 and one or more selected Parlay services 5, 6 and/or 7 is performed via the core network 4 of the network operator and thus is performed in the network operator's domain. The core network may be a backbone network and may transmit the information in suitable form, preferably using IP protocol. In this core network, packets are preferably transmitted in non-encrypted form. Security against unauthorised interception is provided by the gateway (e.g. firewall) of network equipment 3 and possibly further gateways (firewalls) as appropriate.

Although the invention has been described above by mainly referring to Parlay as an example of open service architecture, the invention may also be implemented in any other form of open system architecture, with access control provided by means of a gateway or firewall.

The present invention thus provides a method, system and/or network equipment for access control in an open service architecture, preferably a Parlay architecture. The open service architecture may also be of other type such as OSA (Open Service Architecture). It should be appreciated that the concept of open service architecture applies to any solution where an application interface is used by applications to control a network and thus implement services to the network. A framework entity includes or co-operates with a gateway entity. A client application intending to use a service of the open service architecture signs a service agreement with the Framework. The Framework modifies gateway settings (rules) according to the signed service agreement. The Parlay Framework thus controls the gateway and sets the rules accordingly after the service agreement is signed with the Client Application (i.e. adds a rule to allow IP packets from the IP address of the client application to the IP address of the service entity). The gateway entity restricts the service use in accordance with the signed service agreement. After expiry of the service agreement, the gateway entity inhibits further use of the service by the client application. The framework entity and gateway entity may preferably be arranged within the same network equipment.

The gateway entity can e.g. be a firewall performing packet filtering or a security gateway comprising encryption and authentication protocol processing.

## Claims

1. Method for providing access control in an open service architecture which includes at least one framework entity (3) and at least one service entity (5, 6, 7), the service provided by the at least one service entity being accessible by a client entity (1), wherein the open service architecture includes a gateway entity (3), the gateway entity granting access for the client entity to the at least one service entity, **characterized in that** the gateway entity is controlled from the framework entity and further **characterized in that** the method comprises the steps of:
a client application needing access to a service authenticates itself with the framework entity (3) and subsequently performs a discovery procedure to locate the needed service, and signs a service agreement;
the gateway entity controls the access of the client application to the service in accordance with the signed service agreement; and
the gateway entity inhibits a communication between the client application and the service after expiry of the service agreement.

2. Method according to claim 1, wherein the open service architecture is implemented at least partly in accordance with Parlay specifications.

3. Method according to claim 1 or 2, wherein the framework entity and gateway entity are arranged within the same network equipment.

4. A method according to any one of the preceding claims, wherein the gateway entity (3) is an IP firewall.

5. Method according to any one of the preceding claims, wherein the gateway entity rejects packets from an IP address of the client application to the IP address of the service entity providing the service.

6. Method according to any one of the preceding claims, wherein the gateway entity performs packet filtering.

7. Method according to any one of the preceding claims, wherein the framework entity (3) issues packet filtering instructions to the gateway entity whenever a service agreement is established or whenever a service agreement is revoked.

8. Method according to any one of the preceding claims, wherein the framework entity issues instructions to update security information database whenever a service agreement is established or whenever a service agreement is revoked.

9. Method according to claim 7 or 8, wherein the security information database is a security policy database.

10. Method according to any one of the preceding claims, wherein the gateway entity is a security gateway applying encryption and authentication procedures for datagram traffic passing via the gateway.

11. Method according to any one of the preceding claims, wherein the gateway entity (3) is an IPSEC security gateway.

12. Method according to any one of the preceding claims, wherein the client entity (1) is an addressable node.

13. System for providing access control in an open service architecture which includes at least one framework entity (3) and at least one service entity (5, 6, 7), the service provided by the at least one service entity being accessible by a client entity (1), wherein the open service architecture includes a gateway entity adapted to grant or inhibit access for the client entity to the at least one service entity, **characterized in that**:
the gateway entity is controllable from the framework entity;
a client application needing access to a service is adapted to authenticate itself with the framework entity and subsequently to perform a discovery procedure to locate the needed service, and to sign the agreement;
the gateway entity (3) is adapted to control the access of the client application to the service in accordance with the signed service agreement; and
the gateway entity (3) is adapted to inhibit a communication between the client application and the service after expiry of the service agreement.

14. System according to claim 13, wherein the open service architecture is implemented at least partly in accordance with Parlay specifications.

15. System according to claim 13 or 14, wherein the framework entity and gateway entity are arranged within the same network equipment.

16. System according to any one of claims 13 to 15, wherein the gateway entity is an IP firewall.

17. System according to any one of claims 13 to 16, wherein the gateway entity (3) is adapted to reject packets from an IP address of the client application to the IP address of the service entity providing the service.

18. System according to any one of claims 13 to 17, wherein the gateway entity (3) performs packet filtering.

19. System according to any one of claims 13 to 18, wherein the framework entity (3) is adapted to issue packet filtering instructions to the gateway entity whenever a service agreement is established or whenever a service agreement is revoked.

20. System according to any one of claims 13 to 19, wherein the framework entity (3) is adapted to issue instructions to update a security information database whenever a service agreement is established or whenever a service agreement is revoked.

21. System according to claim 19 or 20, wherein the security information database is a security policy database.

22. System according to any one of claims 13 to 21, wherein the gateway entity is a security gateway applying encryption and authentication procedures for datagram traffic passing via the gateway.

23. System according to any one of claims 13 to 22, wherein the gateway entity (3) is an IPSEC security gateway.

24. System according to any one of claims 13 to 23, wherein the client entity is an addressable node.

## Patentansprüche

1. Verfahren zur Bereitstellung von Zugangskontrolle in einer offenen Dienstarchitektur, die mindestens eine Rahmen-Entität (3) und mindestens eine Dienst-Entität (5, 6, 7) umfasst, wobei der durch die mindestens eine Dienst-Entität bereitgestellte Dienst durch eine Client-Entität (1) zugänglich ist, wobei die offene Dienstarchitektur eine Gateway-Entität (3) umfasst und die Gateway-Entität Zugang für die Client-Entität zu der mindestens einen Dienst-Entität gewährt, **dadurch gekennzeichnet, dass** die Gateway-Entität von der Rahmen-Entität aus gesteuert wird und dass das Verfahren die folgenden Schritte umfasst:
eine Client-Anwendung, die Zugang zu einem Dienst benötigt, authentifiziert sich selbst bei der Rahmen-Entität (3) und führt danach eine Discovery-Prozedur aus, um den benötigten Dienst zu finden, und unterzeichnet eine Dienstvereinbarung;
die Gateway-Entität steuert den Zugang der Client-Anwendung zu dem Dienst gemäß der unterzeichneten Dienstvereinbarung; und
die Gateway-Entität sperrt eine Kommunikation zwischen der Client-Anwendung und dem Dienst nach dem Ablaufen der Dienstvereinbarung.

2. Verfahren nach Anspruch 1, wobei die offene Dienstarchitektur mindestens teilweise gemäß Parlay-Spezifikationen implementiert wird.

3. Verfahren nach Anspruch 1 oder 2, wobei die Rahmen-Entität und die Gateway-Entität in demselben Netzwerkgerät angeordnet sind.

4. Verfahren nach einem der vorhergehenden Ansprüche, wobei die Gateway-Entität (3) eine IP-Firewall ist.

5. Verfahren nach einem der vorhergehenden Ansprüche, wobei die Gateway-Entität Pakete von einer IP-Adresse der Client-Anwendung zu der IP-Adresse der den Dienst bereitstellenden Dienst-Entität zurückweist.

6. Verfahren nach einem der vorhergehenden Ansprüche, wobei die Gateway-Entität Paketfilterung durchführt.

7. Verfahren nach einem der vorhergehenden Ansprüche, wobei die Rahmen-Entität (3) immer dann, wenn eine Dienstvereinbarung festgelegt wird oder immer dann, wenn eine Dienstvereinbarung widerrufen wird, Paketfilterungsanweisungen an die Gateway-Entität ausgibt.

8. Verfahren nach einem der vorhergehenden Ansprüche, wobei die Rahmen-Entität immer dann, wenn eine Dienstvereinbarung festgelegt wird oder immer dann, wenn eine Dienstvereinbarung widerrufen wird, Anweisungen zum Aktualisieren einer Sicherheitsinformationsdatenbank ausgibt.

9. Verfahren nach Anspruch 7 oder 8, wobei die Sicherheitsinformationsdatenbank eine Sicherheitsrichtliniendatenbank ist.

10. Verfahren nach einem der vorhergehenden Ansprüche, wobei die Gateway-Entität ein Sicherheits-Gateway ist, das Verschlüsselungs- und Authentifikationsprozeduren für über das Gateway durchkommenden Datagramm-Verkehr anwendet.

11. Verfahren nach einem der vorhergehenden Ansprüche, wobei die Gateway-Entität (3) ein IPSEC-Sicherheits-Gateway ist.

12. Verfahren nach einem der vorhergehenden Ansprüche, wobei die Client-Entität (1) ein addressierbarer Knoten ist.

13. System zur Bereitstellung von Zugangskontrolle in einer offenen Dienstarchitektur, die mindestens eine Rahmen-Entität (3) und mindestens eine Dienst-Entität (5, 6, 7) umfasst, wobei der durch die mindestens eine Dienst-Entität bereitgestellte Dienst durch eine Client-Entität (1) zugänglich ist, wobei die offene Dienstarchitektur eine Gateway-Entität umfasst, die dafür ausgelegt ist, Zugang für die Client-Entität zu der mindestens einen Dienst-Entität zu gewähren oder zu sperren, **dadurch gekennzeichnet, dass**
die Gateway-Entität von der Rahmen-Entität aus steuerbar ist;
eine Client-Anwendung, die Zugang zu einem Dienst benötigt, dafür ausgelegt ist, sich selbst bei der Rahmen-Entität zu authentifizieren und danach eine Discovery-Prozedur auszuführen, um den benötigten Dienst zu finden, und die Vereinbarung zu unterzeichnen;
die Gateway-Entität (3) dafür ausgelegt ist, den Zugang der Client-Anwendung zu dem Dienst gemäß der unterzeichneten Dienstvereinbarung zu steuern; und
die Gateway-Entität (3) dafür ausgelegt ist, eine Kommunikation zwischen der Client-Anwendung und dem Dienst nach dem Ablauf der Dienstvereinbarung zu sperren.

14. System nach Anspruch 13, wobei die offene Dienstarchitektur mindestens teilweise gemäß Parlay-Spezifikationen implementiert wird.

15. System nach Anspruch 13 oder 14, wobei die Rahmen-Entität und die Gateway-Entität in demselben Netzwerkgerät angeordnet sind.

16. System nach Anspruch 13 bis 15, wobei die Gateway-Entität eine IP-Firewall ist.

17. System nach einem der Ansprüche 13 bis 16, wobei die Gateway-Entität (3) dafür ausgelegt ist, Pakete von einer IP-Adresse der Client-Anwendung zu der IP-Adresse der den Dienst bereitstellenden Dienst-Entität zurückzuweisen.

18. System nach einem der Ansprüche 13 bis 17, wobei die Gateway-Entität (3) Paketfilterung durchführt.

19. System nach einem der Ansprüche 13 bis 18, wobei die Rahmen-Entität (3) dafür ausgelegt ist, immer dann, wenn eine Dienstvereinbarung festgelegt wird oder immer dann, wenn eine Dienstvereinbarung widerrufen wird, Paketfilterungsanweisungen an die Gateway-Entität auszugeben.

20. System nach einem der Ansprüche 13 bis 19, wobei die Rahmen-Entität (3) dafür ausgelegt ist, immer dann, wenn eine Dienstvereinbarung festgelegt wird oder immer dann, wenn eine Dienstvereinbarung widerrufen wird, Anweisungen zum Aktualisieren einer Sicherheitsinformationsdatenbank auszugeben.

21. System nach Anspruch 19 oder 20, wobei die Sicherheitsinformationsdatenbank eine Sicherheitsrichtliniendatenbank ist.

22. System nach einem der Ansprüche 13 bis 21, wobei die Gateway-Entität ein Sicherheits-Gateway ist, das Verschlüsselungs- und Authentifikationsprozeduren für über das Gateway durchkommenden Datagramm-Verkehr anwendet.

23. System nach einem der Ansprüche 13 bis 22, wobei die Gateway-Entität (3) ein IPSEC-Sicherheits-Gateway ist.

24. System nach einem der Ansprüche 13 bis 23, wobei die Client-Entität (1) ein addressierbarer Knoten ist.

## Revendications

1. Un procédé de fourniture d'un contrôle d'accès dans une architecture de systèmes ouverts qui comprend au moins une entité cadre (3) et au moins une entité de service (5, 6, 7), le service fourni par l'au moins une entité de service étant accessible par une entité client (1), dans lequel l'architecture de systèmes ouverts comprend une entité passerelle (3), l'entité passerelle accordant à l'entité client un accès à l'au moins une entité de service, **caractérisé en ce que** l'entité passerelle est commandée à partir de l'entité cadre, et **en ce que** le procédé comprend les opérations suivantes :
une application client ayant besoin d'accéder à un service s'authentifie auprès de l'entité cadre (3) et ensuite exécute une procédure de découverte afin de localiser le service voulu et signe un accord de service,
l'entité passerelle contrôle l'accès de l'application client au service conformément à l'accord de service signé, et
l'entité passerelle bloque une communication entre l'application client et le service après expiration de l'accord de service.

2. Le procédé selon la revendication 1, dans lequel l'architecture de systèmes ouverts est mise en oeuvre au moins partiellement conformément à des spécifications Parlay.

3. Le procédé selon la revendication 1 ou 2, dans lequel l'entité cadre et l'entité passerelle sont agencées à l'intérieur du même équipement de réseau.

4. Le procédé selon l'une quelconque des revendications précédentes, dans lequel l'entité passerelle (3) est un pare-feu IP.

5. Le procédé selon l'une quelconque des revendications précédentes, dans lequel l'entité passerelle rejette des paquets provenant d'une adresse IP de l'application client vers l'adresse IP de l'entité de service fournissant le service.

6. Le procédé selon l'une quelconque des revendications précédentes, dans lequel l'entité passerelle exécute un filtrage de paquets.

7. Le procédé selon l'une quelconque des revendications précédentes, dans lequel l'entité cadre (3) envoie des instructions de filtrage de paquets à l'entité passerelle chaque fois qu'un accord de service est établi ou chaque fois qu'un accord de service est révoqué.

8. Le procédé selon l'une quelconque des revendications précédentes, dans lequel l'entité cadre envoie des instructions destinées à mettre à jour une base de données d'informations de sécurité chaque fois qu'un accord de service est établi ou chaque fois qu'un accord de service est révoqué.

9. Le procédé selon la revendication 7 ou 8, dans lequel la base de données d'informations de sécurité est une base de données de règles de sécurité.

10. Le procédé selon l'une quelconque des revendications précédentes, dans lequel l'entité passerelle est une passerelle de sécurité appliquant des procédures de chiffrement et d'authentification à un trafic de datagrammes passant par la passerelle.

11. Le procédé selon l'une quelconque des revendications précédentes, dans lequel l'entité passerelle (3) est une passerelle de sécurité IPSEC.

12. Le procédé selon l'une quelconque des revendications précédentes, dans lequel l'entité client (1) est un noeud adressable.

13. Un système de fourniture d'un contrôle d'accès dans une architecture de systèmes ouverts qui comprend au moins une entité cadre (3) et au moins une entité de service (5, 6, 7), le service fourni par l'au moins une entité de service étant accessible par une entité client (1), dans lequel l'architecture de systèmes ouverts comprend une entité passerelle adaptée de façon à accorder ou bloquer l'accès par l'entité client à l'au moins une entité de service, **caractérisé en ce que** :
l'entité passerelle peut être commandée à partir de l'entité cadre,
une application client ayant besoin d'accéder à un service est adaptée de façon à s'authentifier auprès de l'entité cadre et
ensuite à exécuter une procédure de découverte afin de localiser le service voulu et signer un accord de service,
l'entité passerelle (3) est adaptée de façon à contrôler l'accès de l'application client au service conformément à l'accord de service signé, et
l'entité passerelle (3) est adaptée de façon à bloquer une communication entre l'application client et le service après expiration de l'accord de service.

14. Le système selon la revendication 13, dans lequel l'architecture de systèmes ouverts est mise en oeuvre au moins partiellement conformément à des spécifications Parlay.

15. Le système selon la revendication 13 ou 14, dans lequel l'entité cadre et l'entité passerelle sont agencées à l'intérieur du même équipement de réseau.

16. Le système selon l'une quelconque des revendications 13 à 15, dans lequel l'entité passerelle est un pare-feu IP.

17. Le système selon l'une quelconque des revendications 13 à 16, dans lequel l'entité passerelle (3) est adaptée de façon à rejeter des paquets provenant d'une adresse IP de l'application client vers l'adresse IP de l'entité de service fournissant le service.

18. Le système selon l'une quelconque des revendications 13 à 17, dans lequel l'entité passerelle (3) exécute un filtrage de paquets.

19. Le système selon l'une quelconque des revendications 13 à 18, dans lequel l'entité cadre (3) est adaptée de façon à envoyer des instructions de filtrage de paquets à l'entité passerelle chaque fois qu'un accord de service est établi ou chaque fois qu'un accord de service est révoqué.

20. Le système selon l'une quelconque des revendications 13 à 19, dans lequel l'entité cadre (3) est adaptée de façon à envoyer des instructions destinées à mettre à jour une base de données d'informations de sécurité chaque fois qu'un accord de service est établi ou chaque fois qu'un accord de service est révoqué.

21. Le système selon la revendication 19 ou 20, dans lequel la base de données d'informations de sécurité est une base de données de règles de sécurité.

22. Le système selon l'une quelconque des revendications 13 à 21, dans lequel l'entité passerelle est une passerelle de sécurité appliquant des procédures de chiffrement et d'authentification à un trafic de datagrammes passant par la passerelle.

23. Le système selon l'une quelconque des revendications 13 à 22, dans lequel l'entité passerelle (3) est une passerelle de sécurité IPSEC.

24. Le système selon l'une quelconque des revendications 13 à 23, dans lequel l'entité client est un noeud adressable.
